# EUROPÄISCHE PATENTSCHRIFT

(11) **EP 1 641 655 B1**
(45) Veröffentlichungstag und Bekanntmachung des Hinweises auf die Patenterteilung: **30.05.2007**
(21) Anmeldenummer: 04738797.2
(22) Anmeldetag: 26.06.2004
(51) Int. Cl.: B60R 21/0132

(54) **VERFAHREN ZUR ANSTEUERUNG EINER INSASSENSCHUTZEINRICHTUNG IN EINEM FAHRZEUG**
METHOD FOR CONTROLLING AN OCCUPANT PROTECTION DEVICE IN A VEHICLE
PROCEDE DE COMMANDE D'UN DISPOSITIF DE PROTECTION DE PASSAGER D'UN VEHICULE

(30) Priorität: 27.06.2003 DE 10328976
(43) Veröffentlichungstag der Anmeldung: 05.04.2006
(73) Patentinhaber: ROBERT BOSCH GMBH, 70442 Stuttgart (DE)
(72) Erfinder: THEISSEN, Marc, 74354 Besigheim (DE); WALZ, Volker, 74321 Bietigheim-Bissingen (DE)
(86) Internationale Anmeldenummer: PCT/DE2004/001350
(87) Internationale Veröffentlichungsnummer: WO 2005/002928

(56) Entgegenhaltungen:
- EP-A- 1 306 269
- WO-A-01/94158
- US-B1- 6 249 730
- US-B1- 6 532 408

## Beschreibung

### STAND DER TECHNIK

Die vorliegende Erfindung betrifft ein Verfahren zur Ansteuerung einer Insassenschutzeinrichtung in einem Fahrzeug, und insbesondere ein Verfahren zur Ansteuerung von Rückhaltemitteln in einem Pkw.

Die Ansteuerung von Rückhaltemitteln, wie z.B. Airbags verschiedenster Ausgestaltung oder ansteuerbarer Gurtstraffer, wird heutzutage auf Basis von Sensoren zur Erfassung einer Beschleunigung in Fahrzeuglängs- und Fahrzeugquerrichtung, d.h. x- und y-Richtung, bewirkt. Bekannt ist darüber hinaus die Auswertung von Upfront bzw. Pre-Crash-Radar-Sensoren, welche insbesondere Insassenschutzmittel, wie eine Verstellung einer Sitzlehne oder das Schließen der Fahrzeugfenster oder des Schiebedaches, ansteuern können. Bei einer Über- bzw. Durchfahrung von Fahrbahnunebenheiten, wie beispielsweise einem Schlagloch, Bordstein, Holzschwelle, Eisenbahnschiene oder auch einem Graben, werden zwar kurzfristig relativ hohe Beschleunigungswerte in der x-/y-Ebene detektiert, eine Auslösung der Rückhaltemittel in solchen sogenannten Misuse-Fahrsituationen ist jedoch nicht erforderlich. Heutige Systeme zur Ansteuerung von Rückhalteeinrichtungen in Fahrzeugen können solche Betriebszustände, wie z.B. eine Fahrt im Gelände, nicht eindeutig von einer tatsächlichen Gefahren-Fahrsituation, wie einem bevorstehenden Crash, unterscheiden.

Aus US 6 249 730 B1, welches die Merkmale des Oberbegriffs des Anspruchs 1 zeigt, ist es bekannt, Beschleunigungen in Fahrzeuglängs- Fahrzeugquer- und Fahrzeugvertikalrichtung zu erfassen. Dabei wird das Signal in Fahrzeugvertikalrichtung mit einem Schwellwert verglichen, um damit eine Saving-Funktion zu realisieren. Aus US 6532 408 B1 ist es bekannt, eine Umfeldsensorik zusätzlich zu einer Beschleunigungssensorik bei der Ansteuerung eines intelligenten Airbagsystems zu verwenden.

### VORTEILE DER ERFINDUNG

Das erfindungsgemäße Verfahren zur Ansteuerung einer Insassenschutzeinrichtung in einem Fahrzeug mit den Merkmalen des Anspruchs 1 weist gegenüber dem bekannten Lösungsansatz den Vorteil auf, dass eine präzise Unterscheidung zwischen der Nichtauslösung der Insassenschutzeinrichtungen bei Fahrbahnunebenheiten, Geländefahrten oder Misuse-Fahrzuständen und der Auslösung der Insassenschutzeinrichtungen bei einem Crash ermöglicht wird. Fahrbahnunebenheiten werden somit erkannt, und diese Information wird bei der Entscheidung über die Auslösung bzw. Nichtauslösung von Insassenschutzeinrichtungen berücksichtigt. Auf dieser Basis ist eine präzise, zuverlässige und robuste Auslöse-Entscheidung berechenbar und ungewollte Auslösungen können verhindert werden.

Die der vorliegenden Erfindung zugrunde liegende Idee besteht im wesentlichen darin, dass die Beschleunigung des Fahrzeugs in z-Richtung, d.h. in vertikaler Richtung, erfasst und genutzt wird, um ungefährliche Fahrbahnunebenheiten bei hohen Beschleunigungen in der x-/y-Ebene zu identifizieren.

Mit anderen Worten wird ein Verfahren zur Ansteuerung einer Insassenschutzeinrichtung in einem Fahrzeug mit den Schritten bereitgestellt: Erfassen einer ersten Messgröße unter gleichzeitiger Generierung eines entsprechenden ersten Signals zum Angeben einer Notwendigkeit zum Ansteuern der Insassenschutzeinrichtung; Erfassen eines Beschleunigungswertes in z-Richtung unter gleichzeitiger Generierung eines entsprechenden zweiten Signals; Berechnen eines Ansteuersignals zur Ansteuerung zumindest einer Insassenschutzeinrichtung in Abhängigkeit vom ersten und zweiten Signal; und Ansteuern der zumindest einen Insassenschutzeinrichtung in Abhängigkeit des berechneten Ansteuersignals. Auf diese Weise kann beispielsweise ein hoher Beschleunigungswert in der x-/y-Ebene, welcher zu einer Auslösung führen würde, bei einem ebenfalls auftretenden Beschleunigungswert in z-Richtung korrigiert werden, um eine Fehlauslösung, beispielsweise bei einer Fahrt durchs Gelände, zu vermeiden.

Gemäß der Erfindung wird eine Anhebung der Auslöseschwelle oder eine Reduktion des Pegels des ersten Signals, abhängig von der Eigengeschwindigkeit des Fahrzeugs oder der Relativgeschwindigkeit des Fahrzeugs bezüglich eines Hindernisses, bei der Berechnung des Auslösesignals durchgerührt. Auf diese Weise kann vorteilhaft die Geschwindigkeit des Fahrzeugs als zusätzlich zu beachtende Größe in die Berechnung miteinfließen.

In den Unteransprüchen finden sich vorteilhafte Weiterbildungen und Ausgestaltungen des in Anspruch 1 angegebenen Verfahrens.

Gemäß einer bevorzugten Weiterbildung werden als erste Messgröße Beschleunigungswerte in x- und/oder y-Richtung und/oder eine Messgröße, welche das Fahrzeugvorfeld und/oder das Fahrzeugumfeld beschreibt, erfasst. Dies birgt den Vorteil der Bezugnahme auf Längs- bzw. Querbeschleunigungswerte und/oder Ergebnisse einer Fahrzeugvorfeld-Überwachung bei einem möglichen Pre-Crash-System.

Gemäß einer weiteren bevorzugten Weiterbildung wird zusätzlich zur Erfassung eines Beschleunigungswertes in x- und/oder y-Richtung das Fahrzeugvorfeld und/oder das Fahrzeugumfeld erfasst unter gleichzeitiger Generierung eines weiteren Signals, welches wie das erste Signal in die Berechnung des Ansteuersignals zur Ansteuerung der zumindest einen Insassenschutzeinrichtung in Abhängigkeit des Pegels des zweiten Signals einfließt. Somit kann auf vorteilhafte Weise ein umfassendes Sensorsystem mit entsprechend generierten Sensorsignalen für die Berechnung zur Ansteuerung von Insassenschutzeinrichtungen herangezogen werden.

Gemäß einer weiteren bevorzugten Weiterbildung werden zur Erfassung der ersten Messgröße Beschleunigungssensoren oder zur Fahrzeugumfeld-/-vorfeld-Erfassung Radar-Sensoren, Lidar-Sensoren, Video-Sensoren oder Ultraschall-Sensoren eingesetzt. Auf diese Weise besteht die Möglichkeit, die Fahrzeugumfeld-/-vorfeld-Detektion zur Generierung der ersten Messgröße auf vielerlei Art vorzusehen.

Gemäß einer weiteren bevorzugten Weiterbildung werden als Insassenschutzeinrichtung Airbags, wie Fahrer- und/oder Beifahrer- und/oder Seiten- und/oder Kopf- und/oder Knie- und/oder Window-Airbags und/oder elektrisch betätigbare Seitenscheiben und/oder Schiebedach und/oder Sitze und/oder reversible oder pyrotechnische Gurtstraffer angesteuert. Von Vorteil dabei ist, dass eine große Kombination von Insassenschutzeinrichtungen zum Schutz der Insassen auf Basis des erfindungsgemäßen Verfahrens ansteuerbar sind.

Gemäß einer weiteren bevorzugten Weiterbildung wird bei der Berechnung des Ansteuersignals der Pegel des ersten Signals abhängig vom zweiten Signal und/oder vom Fahrzeugmodell reduziert. Durch diesen Verfahrensschritt erfolgt eine vorteilhafte Anpassung des Auslöseverhaltens der Insassenschutzeinrichtungen.

Gemäß einer weiteren bevorzugten Weiterbildung werden nur die Pegelspitzen des ersten Signals in Abhängigkeit des zweiten Signals reduziert, oder der Pegel des ersten Signals wird in Abhängigkeit des Pegels des zweiten Signals um einen vorbestimmten Wert reduziert. Dies birgt den Vorteil einer vereinfachten Rechenoperation bei der Berechnung des Ansteuersignals.

Gemäß einer weiteren bevorzugten Weiterbildung wird die Ansteuerschwelle zur Ansteuerung der zumindest einen Insassenschutzeinrichtung bei der Berechnung des Ansteuersignals in Abhängigkeit des zweiten Signals angehoben. Auch durch diesen Verfahrensschritt erfolgt eine einfache Anpassung des Auslöseverhaltens.

### ZEICHNUNGEN

Ein Ausführungsbeispiel der Erfindung ist in der Zeichnung dargestellt und in der nachfolgenden Beschreibung näher erläutert.

Es zeigt:

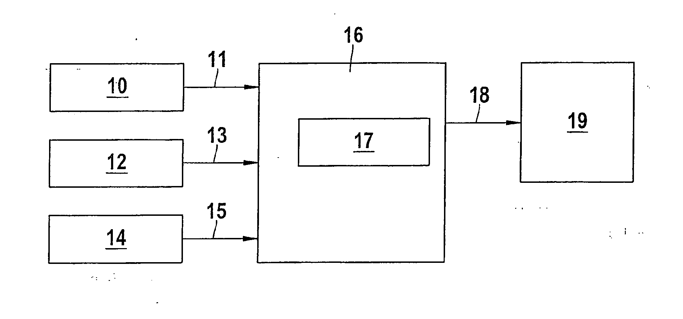

- Figur 1: ein schematisches Blockdiagramm zur Erläuterung einer Ausführungsform der vorliegenden Erfindung.

### BESCHREIBUNG DES AUSFÜHRUNGSBEISPIELS

In Figur 1 ist ein schematisches Blockdiagramm dargestellt, welches einzelne Systemkomponenten und deren Zusammenhang aufzeigt. Das Insassenschutzsystem gemäß Figur 1 weist einen Beschleunigungssensor 10 zur Erfassung einer Beschleunigung in x- und/oder y-Richtung, d.h. in Fahrzeuglängs- bzw. Fahrzeugquerrichtung, auf. Diese Sensorik 10 kann somit vorzugsweise Beschleunigungswerte in der x-/y-Ebene detektieren und ein entsprechendes Sensorsignal 11 generieren. Des weiteren verfügt das System gemäß Figur 1 über eine Erfassungseinrichtung 12 zur Erfassung von Beschleunigungen in z-Richtung, d.h. in vertikaler Richtung, welche der Hochachse eines Fahrzeugs entspricht. Auch diese Sensorik 12 ermittelt Beschleunigungswerte, jedoch in z-Richtung, und erzeugt entsprechende Sensorsignale 13.

Darüber hinaus ist vorzugsweise eine Erfassungseinrichtung 14 zur Erfassung des Fahrzeugvorfelds oder des Fahrzeugumfelds vorgesehen. Die Erfassungseinrichtung 14 kann alternativ dazu von anderen Fahrzeugsystemen, wie beispielsweise dem ABS und/oder ESP-System, Daten erfassen, welche auf eine Gefahrensituation, wie z.B. Schlupf an verschiedenen Rädern des Fahrzeugs, hinweisen. Auch die Erfassungseinrichtung 14 gibt ein Signal 15 aus. Der gemäß eines Ausführungsbeispiels als Pre-Crash-Sensor ausgelegte Erfassungsblock 14 (Upfront-Sensor ) weist beispielsweise einen Radar-, Lidar-, Video- oder Ultraschall-Sensor, vorzugsweise mit entsprechender Signalverarbeitung, auf. Weist das Fahrzeug beispielsweise ein Wankbewegungs-Regelungssystem auf (Active-Body-Control-System), welches über einen Beschleunigungssensor 12 zur Erfassung von Beschleunigungen in z-Richtung verfügt, so kann dieser Sensor im System gemäß Figur 1 eingesetzt werden. Die Erfassungseinrichtung 10 zur Beschleunigungsdetektion in x- und/oder y-Richtung weist zumindest einen Sensor auf, welcher vorzugsweise in einer Ansteuereinrichtung 16 integriert sein kann.

Die Signale 11, 13 und 15 der Erfassungseinrichtungen 10, 12 und 14 sind an die Ansteuereinrichtung 16 gekoppelt, vorzugsweise draht- oder lichtleitergebunden oder per Funkverbindung. In der Ansteuereinrichtung 16 bzw. dem Steuergerät werden die erfassten Beschleunigungswerte 11, 13 bzw. die erfassten Messgrößen 15 der Pre-Crash-Sensorik 14 einem Algorithmus 17 zur Berechnung eines Ansteuersignals 18 zugeführt. Die Berechnung erfolgt vorzugsweise auf einem Prozessor (nicht dargestellt), auf welchem der Algorithmus 17 abgearbeitet wird. Die Ansteuereinrichtung 16 kann nun anhand der z-Beschleunigungswerte Fahrbahnunebenheiten, wie beispielsweise ein Schlagloch, Bordstein, Holzschwelle, Eisenbahnschiene oder einen Graben, gegebenenfalls im Gelände, in Verbindung mit den x- und/oder y-Beschleunigungswerten erkennen und die Ansteuerung, d.h. das Ansteuersignal 18, zumindest einer Insassenschutzeinrichtung 19 davon abhängig steuern.

Die Beeinflussung der Auslöse-Entscheidung kann gemäß dem Algorithmus 17 beispielsweise derart erfolgen, dass ein x-Beschleunigungssignal fahrzeugmodell-basiert bei einem entsprechenden Pegel des z-Beschleunigungswerts reduziert wird. Vorzugsweise werden dann nur die Spitzenpegel des Beschleunigungssignals (x-Richtung) verringert, oder der gesamte Signalpegel wird um einen vorbestimmten Betrag reduziert. Andererseits besteht die Möglichkeit, den Algorithmus 17 derart zu gestalten, dass die Auslöseschwelle zur Generierung des Ansteuersignals 18 abhängig von der Beschleunigung in z-Richtung angehoben wird. Ein weiteres mögliches Ausführungsbeispiel des Algorithmus 17 und damit des Systemverhaltens besteht vorzugsweise darin, dass die Reduzierung des Beschleunigungssignals (x-Richtung) und/oder die Anhebung der Auslöseschwelle abhängig von der Eigengeschwindigkeit und/oder von der durch die Pre-Crash-Sensorik 14 gemessene Relativgeschwindigkeit erfolgt. Das heißt, in Anbetracht des z-Beschleunigungswertes wird die Auslösung des/der Insassenschutzeinrichtung(en) unterbunden, obwohl der Beschleunigungswert in x- und/oder y-Richtung unter normalen Umständen eine Auslösung mit sich brächte. Durch die Gesamtheit der Informationen kann die Ansteuereinrichtung 16 somit erkennen, dass z.B. eine Fahrt im Gelände oder ein Misuse-Fahrzustand vorliegt, bei welchem eine Auslösung der Insassenschutzeinrichtung nicht sinnvoll und wünschenswert ist. Der Algorithmus 17 sorgt daraufhin dafür, dass das Ansteuersignal 18 zur Auslösung zumindest einer Insassenschutzeinrichtung 19 nicht ergeht.

Zu steuernde Insassenschutzeinrichtungen 19 bzw. Rückhaltemittel weisen vorzugsweise pyrotechnische oder reversible Gurtstraffer und/oder Airbags, wie z.B. Fahrer-, Beifahrer-, Seiten-, Kopf-, Knie-, und/oder Window-Airbags, usw. auf. Außerdem weisen die Insassenschutzeinrichtungen 19 vorzugsweise auch elektrisch einzustellende Sitze oder ein elektrisch betätigbares Schiebedach und/oder elektrisch betätigbare Seitenfenster auf. Die Steuerung dieser Insassenschutzeinrichtungen 19 wird entweder von einem oder von mehreren Steuergeräten 16 übernommen, welche das entsprechende Ansteuersignal 18 auf der Basis der vom Algorithmus bearbeiteten Sensorsignale fällt. Auf diese Weise lässt sich eine Geländefahrsituation erkennen und vorzugsweise eine Verminderung der Empfindlichkeit, z.B. des Airbag-Auslösesystems, erfolgen. Bei der Auswertung der Signale kann dabei im Vergleich zur kurzen Dauer eines Unfalls die Auswertung über einen relativ langen Zeitraum erfolgen.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

So ist das erfindungsgemäße Verfahren bzw. die erfindungsgemäße Vorrichtung nicht auf Pkws beschränkt, sondern kann bei beliebigen Fahrzeugen zu Lande und auch zu Wasser, beispielsweise in einem Power-Boot, eingesetzt werden. Darüber hinaus sind über zusätzliche Sensoren beliebige weitere Signale generierbar, welche dem Algorithmus zusätzlich bei der Generierung eines Ansteuersignals zur Verfügung stehen, um das Auslöseverhalten weiter zu verbessern.

## Patentansprüche

1. Verfahren zur Ansteuerung einer Insassenschutzeinrichtung (19) in einem Fahrzeug mit den Schritten:
Erfassen einer ersten Messgröße unter gleichzeitiger Generierung eines entsprechenden ersten Signals (11) zum Angeben einer Notwendigkeit zum Ansteuern der Insassenschutzeinrichtung (19);
Erfassen eines Beschleunigungswertes in z-Richtung unter gleichzeitiger Generierung eines entsprechenden zweiten Signals (13);
Berechnen eines Ansteuersignals (18) zur Ansteuerung zumindest einer Insassenschutzeinrichtung (19) in Abhängigkeit vom ersten und zweiten Signals (11, 13); und
Ansteuern der zumindest einen Insassenschutzeinrichtung (19) in Abhängigkeit des berechneten Ansteuersignals (18)
**dadurch gekennzeichnet,**
**dass** eine Anhebung der Auslöseschwelle oder eine Reduktion des Pegels des ersten Signals (11) abhängig von der Eigengeschwindigkeit des Fahrzeugs oder der Relativgeschwindigkeit des Fahrzeugs bezüglich eines Hindernisses bei der Berechnung des Auslösesignals (18) durchgeführt wird.

2. Verfahren nach Anspruch 1,
**dadurch gekennzeichnet,**
**dass** als erste Messgröße Beschleunigungswerte in x- und/oder y-Richtung und/oder eine Messgröße, welche das Fahrzeugvorfeld und/oder das Fahrzeugumfeld beschreibt, erfasst werden.

3. Verfahren nach Anspruch 1,
**dadurch gekennzeichnet,**
**dass** zusätzlich zur Erfassung eines Beschleunigungswertes in x- und/oder y-Richtung das Fahrzeugvorfeld und/oder Fahrzeugumfeld erfasst wird unter gleichzeitiger Generierung eines weiteren Signals (15), welches wie das erste Signal (11) in die Berechnung des Ansteuersignals (18) zur Ansteuerung der zumindest einen Insassenschutzeinrichtung (19) in Abhängigkeit des Pegels des zweiten Signals (13) einfließt.

4. Verfahren nach Anspruch 1, 2 oder 3,
**dadurch gekennzeichnet,**
**dass** zur Erfassung der ersten Messgröße Beschleunigungssensoren (10) oder zur Fahrzeugumfeld/-vorfelderfassung Radar-Sensoren (14), Lidar-Sensoren (14), Video-Sensoren (14) oder Ultraschall-Sensoren (14) eingesetzt werden.

5. Verfahren nach einem der vorangehenden Ansprüche,
**dadurch gekennzeichnet,**
**dass** als Insassenschutzeinrichtung (19) Airbags wie Fahrer- und/oder Beifahrer- und/oder Seiten- und/oder Kopf- und/oder Knie- und/oder Window-Airbags und/oder elektrisch betätigbare Seitenscheiben und/oder Schiebedach und/oder Sitze und/oder reversible oder pyrotechnische Gurtstraffer angesteuert werden.

6. Verfahren nach einem der vorangehenden Ansprüche,
**dadurch gekennzeichnet,**
**dass** bei der Berechnung des Ansteuersignals (18) der Pegel des ersten Signals (11) abhängig vom zweiten Signal (13) und/oder vom Fahrzeugmodell reduziert wird.

7. Verfahren nach Anspruch 6,
**dadurch gekennzeichnet,**
**dass** nur die Pegelspitzen des ersten Signals (11) in Abhängigkeit des zweiten Signals (13) reduziert werden, oder dass der Pegel des ersten Signals (11) in Abhängigkeit des Pegels des zweiten Signals (13) um einen vorbestimmten Wert reduziert wird.

8. Verfahren nach einem der Ansprüche 1 bis 5,
**dadurch gekennzeichnet,**
**dass** die Ansteuerschwelle zur Ansteuerung der zumindest einen Insassenschutzeinrichtung (19) bei der Berechnung des Ansteuersignals (18) in Abhängigkeit des zweiten Signals (13) angehoben wird.

## Claims

1. Method for activating a vehicle occupant protection device (19) in a vehicle having the steps:
a first measurement variable is acquired with simultaneous generation of a corresponding first signal (11) in order to specify a need to activate the vehicle occupant protection device (19);
an acceleration value is acquired in the z direction with simultaneous generation of a corresponding second signal (13);
an activation signal (18) for activating at least one vehicle occupant protection device (19) is calculated as a function of the first and second signals (11, 13); and
the at least one vehicle occupant protection device (19) is activated as a function of the calculated activation signal (18),
**characterized in that** the triggering threshold is raised or the level of the first signal (11) is reduced as a function of the vehicle's own speed or the relative speed of the vehicle with respect to an obstacle during the calculation of the triggering signal (18).

2. Method according to Claim 1, **characterized in that** acceleration values in the x and/or y directions and/or a measurement variable which describes the area in front of the vehicle and/or the area surrounding the vehicle are acquired as first measurement variable.

3. Method according to Claim 1, **characterized in that** in addition to the acquisition of an acceleration value in the x and/or y directions the area in front of the vehicle and/or the area surrounding the vehicle are sensed with simultaneous generation of a further signal (15) which, like the first signal (11), is included in the calculation of the activation signal (18) in order to activate the at least one vehicle occupant protection device (19) as a function of the level of the second signal (13).

4. Method according to Claim 1, 2 or 3, **characterized in that** acceleration sensors (10) are used to acquire the first measurement variable or radar sensors (14), lidar sensors (14), video sensors (14) or ultrasonic sensors (14) are used to sense the area surrounding the vehicle or the area in front of the vehicle.

5. Method according to one of the preceding claims, **characterized in that** airbags such as driver airbags and/or front seat passenger airbags and/or side airbags and/or head airbags and/or knee airbags and/or window airbags and/or side windows which can be activated electrically and/or a sunroof and/or seats and/or reversible or pyrotechnic seat belt pretensioners are activated as the vehicle occupant protection device (19).

6. Method according to one of the preceding claims, **characterized in that** during the calculation of the activation signal (18), the level of the first signal (11) is reduced as a function of the second signal (13) and/or of the vehicle model.

7. Method according to Claim 6, **characterized in that** only the level peaks of the first signal (11) are reduced as a function of the second signal (13), or **in that** the level of the first signal (11) is reduced by a predetermined value as a function of the level of the second signal (13).

8. Method according to one of Claims 1 to 5, **characterized in that** the activation threshold for activating the at least one vehicle occupant protection device (19) is raised as a function of the second signal (13) during the calculation of the activation signal (18).

## Revendications

1. Procédé de commande d'un dispositif de protection de passager (19) dans un véhicule, comprenant les étapes consistant à :
- saisir une première grandeur de mesure tout en générant en même temps un premier signal (11) correspondant pour indiquer une nécessité de commande du dispositif de protection de passager (19),
- saisir une valeur d'accélération dans la direction z tout en générant en même temps un deuxième signal correspondant (13),
- calculer un signal de commande (18) pour commander au moins un dispositif de protection de passager (19) en fonction des premier et deuxième signaux (11, 13), et
- commander au moins un dispositif de protection de passager (19) en fonction du signal de commande (18) calculé,
**caractérisé en ce qu'**
on relève le seuil de déclenchement ou réduit le niveau du premier signal (11) en fonction de la vitesse propre du véhicule ou de sa vitesse relative par rapport à un obstacle pendant le calcul du signal de déclenchement (18).

2. Procédé selon la revendication 1,
**caractérisé en ce que**
comme première grandeur de mesure, on saisit des valeurs d'accélération dans la direction x et/ ou y et/ ou une grandeur de mesure qui définit la zone située devant le véhicule et/ou son environnement.

3. Procédé selon la revendication 1,
**caractérisé en ce que**
outre la saisie d'une valeur d'accélération dans la direction x et/ou y, on saisit la zone située devant le véhicule et/ ou son environnement tout en générant un autre signal (15) qui, comme le premier signal (11), entre dans le calcul du signal de commande (18) afin de commander au moins un dispositif de protection de passager (19) en fonction du niveau du deuxième signal (13).

4. Procédé selon la revendication 1, 2 ou 3,
**caractérisé en ce que**
pour la saisie de la première grandeur de mesure, on utilise des capteurs d'accélération (10) et, pour la saisie de l'environnement du véhicule/de la zone située devant lui, on utilise des capteurs radar (14), des capteurs à détection et télémétrie par la lumière (14), des capteurs vidéo (14) ou des capteurs aux ultrasons (14).

5. Procédé selon l'une des revendications précédentes,
**caractérisé en ce que**
comme dispositif de protection de passager (19), on commande des coussins gonflables tels que des airbags pour conducteur et/ou passager avant et/ou des airbags latéraux et/ou pour la tête et/ou les genoux et/ou pour les vitres latérales et/ou des vitres latérales et/ou un toit coulissant et/ou des sièges à commande électrique et/ou des tendeurs de ceintures réversibles ou pyrotechniques.

6. Procédé selon l'une des revendications précédentes,
**caractérisé en ce que**
pendant le calcul du signal de commande (18), le niveau du premier signal (11) est réduit en fonction du deuxième signal (13) et/ ou du modèle de véhicule.

7. Procédé selon la revendication 6,
**caractérisé en ce que**
seuls les pics de niveau du premier signal (11) sont réduits en fonction du deuxième signal (13), ou on réduit le niveau du premier signal (11) d'une valeur prédéterminée en fonction du niveau du deuxième signal (13).

8. Procédé selon l'une des revendications 1 à 5,
**caractérisé en ce que**
le seuil de commande d'au moins un dispositif de protection de passager (19) est relevé pendant le calcul du signal de commande (18) en fonction du deuxième signal (13).
